# EUROPÄISCHE PATENTANMELDUNG

(11) **EP 4 763 762 A1**
(43) Veröffentlichungstag der Anmeldung: **24.06.2026**
(21) Anmeldenummer: 25225311.7
(22) Anmeldetag: 18.12.2025
(51) Int. Cl.: B65G 53/00, B65G 53/22, B65G 53/66

(54) **SYSTEM ZUR DRUCKLUFTRÜCKGEWINNUNG**

(30) Priorität: 19.12.2024 DE 102024139083
(71) Anmelder: Teubert Maschinenbau GmbH, 78176 Blumberg (DE)
(72) Erfinder: Teubert, Yannick, 78176 Blumberg (DE)
(74) Vertreter: Dr. Völger, Wolfgang

(57) **Zusammenfassung**

Die vorliegende Erfindung bezieht sich auf ein System zur Druckluftrückgewinnung für ein druckluftbasiertes Fördersystem, umfassend
- mindestens eine Bevorratungseinheit (1),
- mindestens eine Zieleinheit (3),
- mindestens ein Druckluftsystem,
- Ventile zur Druckentlastung in der Zielposition sowie der Bevorratungsstation,
- mindestens ein Tank (8) zur Zwischenspeicherung von Druckluft.

Die vorliegende Erfindung betrifft ferner ein Verfahren zur Druckluftrückgewinnung sowie ein Verfahren zur Druckluftrückgewinnung in einem Partikelschaumprozess.

## Beschreibung

Die vorliegende Erfindung bezieht sich auf ein System zur Druckluftrückgewinnung sowie dessen Verwendung zur Herstellung in einem Fertigungsprozess, bevorzugt einem urformenden Fertigungsprozess.

Druckluft wird in Fertigungsprozessen oft als Prozessmittel zur Förderung im Materialtransport eingesetzt. Dabei kann es sich sowohl um den Transport von Werkstückträgern, als auch direkt um Materialtransport handeln.

Die Erzeugung von Druckluft ist sehr energie- und kostenintensiv, weshalb deren Verwendung seit langer Zeit ohnehin prozessoptimiert erfolgt. Werkstückträger können beispielsweise durch Druckluft zur nächsten Bearbeitungsstation weiter transportiert werden. Auch im Prozess der pneumatischen Unterstützung im Montageprozess oder beim direkten Transport von Werkstücken ist der Einsatz von Druckluft nicht mehr wegzudenken.

Obwohl ihr Einsatz derart kostenintensiv ist, unterbleibt bislang der Versuch, Druckluft zurückzugewinnen. Stattdessen wird sie in die anliegende Fertigungsumgebung, oft über Schalldämpfer, entlassen. Auch wenn Druckluft zum Materialtransport genutzt wird, wie im hier vorliegenden Fall beispielsweise zum Transport von Rieselgut in eine Kavität, wird die Druckluftleitung bei Erreichen des gewünschten Füllstandes einer Kavität bisher druckfrei gestellt.

Im vorliegenden Fall bedeutet "druckfrei", dass der Druck in einigen Systembereichen anderen Systembereichen angepasst wird, oder der Gesamtsystemdruck dem Umgebungsdruck angepasst wird.

Durch gestiegene Energiekosten sowie den Anspruch und die Verpflichtung, nachhaltig zu produzieren, wurde nach einer Möglichkeit gesucht, in einem System genutzte Druckluft zurückzugewinnen.

Der vorliegenden Erfindung liegt daher die Aufgabe zugrunde, die Nachteile des Standes der Technik zu überwinden und ein System zur Druckluftrückgewinnung bereitzustellen, mit dessen Hilfe Energieeinsparungen im Betriebsablauf bei Einsatz von Druckluft im Fertigungsprozess möglich sind.

Die vorstehend genannte Aufgabe wird in einem ersten Aspekt durch ein System zur Druckluftrückgewinnung für ein druckluftbasiertes Fördersystem gelöst, umfassend mindestens eine Bevorratungseinheit (1), mindestens eine Zieleinheit (3), mindestens ein Druckluftsystem, Ventile zur Druckentlastung in der Zielposition sowie der Bevorratungseinheit (1) und mindestens ein Tank (8) zur Zwischenspeicherung von Druckluft.

In der Bevorratungseinheit (1) ist das zu fördernde Gut gelagert, welches über ein Druckluftsystem zu einer Zieleinheit (3) gelangt. Ist der Zielzustand, beispielsweise eine Zielposition oder ein Füllungsgrad in der Zieleinheit (3) erreicht, kann über Ventile eine Druckentlastung des Systems erfolgen. Dabei wird sowohl die Bevorratungseinheit (1) als auch die Zieleinheit (3) zumindest zeitweise druckfrei gestellt. Vorteilhaft und kennzeichnend bei der vorliegenden Erfindung ist, dass diese Druckluft über ein Pneumatiksystem aufgefangen wird und in einem Tank (8) zur Zwischenspeicherung von Druckluft aufgefangen werden kann. Damit kann Energie eingespart werden, welche sonst ungenutzt in die Umgebung entweichen würde. Obwohl Steuerungen bisher sehr effizient sind, ist die Menge an entweichender Druckluft pro Fertigungsvorgang immer noch hoch und es besteht die Möglichkeit, hier Energie einzusparen. Die aufgefangene Druckluft bleibt im System und kann in zukünftigen Prozessschritten genutzt werden. Die Menge der neu zu produzierenden Druckluft sinkt und es geht keine Energie ungenutzt verloren.

Das erfindungsgemäße Druckluftrückgewinnungssystem umfasst ferner einen Pneumatikkreislauf, bestehend vorzugsweise aus zwei Leitungen, welche ergänzend zur bestehenden Fertigungsanlage geführt werden. Eine erste Leitung (9) ist zwischen Zieleinheit (3) und Tank (8) zur Zwischenspeicherung von Druckluft und eine zweite Leitung (10) zwischen Bevorratungseinheit (1) und Tank (8) zur Zwischenspeicherung von Druckluft angeordnet. Um eine klare Prozessrichtung vorzugeben, befinden sich in der ersten Leitung (9) und der zweiten Leitung (10) Rückschlagventile (7) in Tanknähe (8), die ein Einströmen in den Tank (8) zur Zwischenspeicherung ermöglichen, unkontrolliertes Ausströmen aus dem Tank (8) aber verhindern. Ferner sind in beiden Leitungen (9, 10) Ladeventile (4) vorgesehen, welche bei der ersten Leitung (9) direkt nach der Zielposition (3) und in der zweiten Leitung (10) nach der Bevorratungseinheit (1) angeordnet sind. Weitere Ventile und Bauteile in und an den Leitungen sind möglich und werden prozessabhängig hinzugefügt.

Als besonderes geeignet für das erfindungsgemäße System hat sich die Anwendung im Bereich der Partikelförderung gezeigt. Dafür ist in dieser besonderen Ausführungsart die Bevorratungseinheit (1) ein Vorratsbehälter für Rieselgut und die Zielposition (3) eine füllbare formgebende Kavität. Besonders vorteilhaft hat sich erwiesen, bei der Fülleinheit (2) ein Element zur Strömungsbeschleunigung vorzusehen und dieses im Materialfluss anzuordnen. Wird das Rieselgut aus der Bevorratungseinheit (1) entnommen, kann es über die Fülleinheit (2), umfassend zusätzlich einen Füllschlauch, eine Dosiereinheit und ein Element zur Beschleunigung des Materialflusses zur formgebenden Kavität (3) geleitet werden.

Es hat sich als besonders vorteilhaft herausgestellt, mindestens einen Durchflusssensor in die Fülleinheit (2) zu integrieren und mit der Dosiereinheit zu verbinden, um den Füllungsgrad der Kavität (3) zu überwachen. So kann die Dosiereinheit den Materialfluss aus der Kavität (3) entsprechend vollständig oder teilweise drosseln, sofern dies erforderlich sein sollte.

Die Kavität (3) selbst kann mehrteilig ausgeführt sein. Damit wird auch ein späteres Ausformen erleichtert. Ferner kann sie beheizt sein sowie mit Anschlüssen für Druckluft und/oder Heißdampf versehen sein, sofern dies prozessrelevant sein sollte. Mithilfe eines optional, prozessabhängig vorzusehenden formseitigen Ablassventils (5) kann Restfluid aus dem Prozess abgeschieden werden.

In einer besonders bevorzugten Ausführungsform befindet sich in der Fülleinheit (2) ein Element zur Beschleunigung des Materialflusses zwischen der Dosiereinheit und der formgebenden Kavität (3). Das Rieselgut wird dafür durch dieses Element geführt, wobei ebenfalls Druckluft auf den Materialstrom trifft und dieser damit zusätzlich beschleunigt wird. Der hauptsächliche Materialtransport erfolgt jedoch durch die Druckdifferenz zwischen der Bevorratungseinheit (1) und der formgebenden Kavität (3).

Das Volumen des Tanks (8) zur Zwischenspeicherung von Druckluft kann variabel eingestellt werden. In einer bevorzugten Ausführungsvariante wird das Volumen durch Zufuhr von einem nicht kompressiblen Medium, vorzugsweise Wasser, in den Tank (8) reguliert. Der Überdruck der Druckluft gegenüber der Atmosphäre kann somit auch im Tank (8) erhalten bleiben und sogar im System relativ konstant gehalten werden, ohne dass Druckluft neu erzeugt werden muss, allein basierend auf der Regulation des Wasserspiegels. In Abhängigkeit von der anfallenden Menge Druckluft sowie möglicherweise anderen prozessrelevanten Faktoren wird das Tankvolumen entsprechend eingestellt. In einer anderen Ausführungsart wird ein Membranspeicher eingesetzt, um das Volumen des Zwischenspeichers zu regulieren. Eine weitere Ausführungsart umfasst die Verwendung einzelner Füllkörper, optional gefüllt mit kompressiblen oder inkompressiblen Medien zur Zwischenspeicherung von Druckluft in einem Tank sind, welche abhängig vom Bedarf in das System eingebunden werden können.

In einer Weiterbildung des erfindungsgemäßen Systems ist der Pneumatikkreislauf derart ausgebildet, dass Druckluft aus sowohl der Zieleinheit (3) als auch der Bevorratungseinheit (1) getrennt und jeweils gesteuert in den Tank (8) überführbar ist. Damit wird eine optimale Verwendung der erzeugten Druckluft erreicht. Zudem ist es erfindungsgemäß möglich dass die Druckluft jeweils gezielt und gesteuert behandelt wird.

Der zweite Aspekt der vorliegenden Erfindung betrifft das erfindungsgemäße Verfahren zur Druckluftrückgewinnung. Dieses Verfahren umfasst die Schritte
a) Bedruckung mit Druckluft einer Bevorratungseinheit (1) und einer damit verbundenen Zieleinheit (3), wobei der Druck in der Zieleinheit (3) geringer als in der Bevorratungseinheit (1) gewählt wird,
b) Öffnen der Verbindung zwischen Bevorratungseinheit (1) und Zieleinheit (3),
c) Stoppen der Förderung, wenn eine Zielgröße in der Zieleinheit (3) erreicht ist,
d) Regelung des Drucks für die Zieleinheit (3) durch Ablassen der Druckluft über Ladeventile (4) in den Tank (8) zur Zwischenspeicherung von Druckluft über die erste Leitung (9),
e) Regelung des Drucks für die Bevorratungseinheit (1) durch Ablassen der Druckluft über Ladeventile (4) in den Tank (8) zur Zwischenspeicherung von Druckluft über die zweite Leitung (10)
f) Zwischenspeicherung der abgelassenen Druckluft in den Tank (8) zur Zwischenspeicherung von Druckluft,
g) bei vollständiger Füllung des Tanks (8) zur Zwischenspeicherung von Druckluft Wirken der Rückschlagventile (7) in der ersten Leitung (9) und in der zweiten Leitung (10), Schließen der Ladeventile (4) und Entlassen von Druckluft aus der Bevorratungseinheit (1) und der Zieleinheit (3) in die Umgebung.

Der Inhalt der Bevorratungseinheit wird, genau wie die Zieleinheit (3), mit Druck beaufschlagt, wobei der Druck in der Bevorratungseinheit höher gewählt wird, als jener in der Zieleinheit (3). Das entstehende Druckgefälle sorgt dafür, dass es einen Materialtransport von der Bevorratungseinheit (1) zur Zieleinheit (3) gibt, sobald die Verbindung zwischen beiden Einheiten ermöglicht wird. Wird in der Zieleinheit (3) ein Zielwert erreicht, wird der Materialfluss gestoppt. Schon während des Füllvorganges und final nach Beendigung des Füllvorgangs wird Druckluft aus dem System über die Ladeventile (4) in der ersten Leitung (9) in den Tank (8) zur Zwischenspeicherung von Druckluft geleitet. Optional in diesem Leitungsabschnitt befindliche formseitige Ablassventile (5) entfernen mögliche prozessbedingt anfallenden Fluide. Durch gezielte Ansteuerung der Ladeventile (4) kann eine präzise Druckregulierung erfolgen und damit der Materialfluss optimiert werden. Über eine zweite Leitung (10), in der sich ebenfalls mindestens ein Ladeventil (4) befindet, kann der Vorratsbehälter (1) druckfrei gestellt werden, wobei die Druckluft aus dem Vorratsbehälter (1) durch das Ladeventil (4) und anschließend durch ein Rückschlagventil (7) in den Tank (8) geführt wird.

Die Druckluft wird durch ein Rückschlagventil (7) in den Tank (8) zur Zwischenspeicherung geführt, um zu verhindern, dass Druckluft aus dem Tank (8) zurück in das System strömt. Der Tank (8) zur Zwischenspeicherung von Druckluft hat ein Volumen bis zu 50 Kubikmetern, vorzugsweise aber ein Volumen im Bereich von 0,1 bis 10 Kubikmetern, was 100 bis 10.000 Litern entspricht. In diesem Tank (8) wird die Druckluft zur späteren Weiterverwendung gespeichert.

Bei vollständiger Füllung des Tankes (8) mit Druckluft kann durch die Rückschlagventile (7) sowie die Ladeventile (4) keine Druckluft mehr aus dem Tank entweichen und eventuell noch anfallende Druckluft wird durch Entlastungsventile (6) in die Fertigungsumgebung freigesetzt.

Eine Weiterbildung des erfindungsgemäßen Verfahrens sieht vor, dass in Schritt d) die Regelung des Drucks für die Zieleinheit (3) durch Ablassen der Druckluft über Ladeventile (4) und zusätzlich ein Rückschlagventil (7) in den Tank (8) zur Zwischenspeicherung von Druckluft über die erste Leitung (9) erfolgt
Zusätzlich oder alternativ kann in Schritt e) die Regelung des Drucks für die Bevorratungseinheit (1) durch Ablassen der Druckluft über Ladeventile (4) und zusätzlich ein Rückschlagventil (7) in den Tank (8) zur Zwischenspeicherung von Druckluft über die zweite Leitung (10) erfolgen.

Das Verfahren ist in einem dritten Aspekt der vorliegenden Erfindung besonders geeignet, um in der Fertigung von Bauteilen aus Partikelschaum eingesetzt zu werden. Dieses Verfahren umfasst die Schritte
i) Bedruckung mit Druckluft eines Vorratsbehälters (1) für Schüttgut und einer damit verbundenen füllbaren, formgebenden Kavität (3), wobei der Druck in der füllbaren, formgebenden Kavität (3) geringer als im Vorratsbehälter (1) für Schüttgut gewählt wird,
ii) Öffnen der Fülleinheit (2) zwischen Vorratsbehälter (1) für Schüttgut und Kavität (3), wobei der Materialfluss durch die Dosiereinheit gesteuert wird,
iii) Stoppen des Materialflusses, wenn ein Füllgrad der formgebenden Kavität (3) erreicht ist,
iv) Regelung des Drucks für den Vorratsbehälter (1) für Schüttgut durch Ablassen der Druckluft über Ladeventile (4) in einen Tank (8) zur Zwischenspeicherung von Druckluft über die erste Leitung (9),
v) Regelung des Drucks für die Kavität (3) durch Ablassen der Druckluft über Ladeventile (4) in den Tank (8) zur Zwischenspeicherung von Druckluft über die zweite Leitung (10),
vi) Zwischenspeicherung der abgelassenen Druckluft in den Tank (8) zur Zwischenspeicherung von Druckluft,
vii) Rückführung des Materials aus Leitungen zwischen formgebender Kavität (3) und Vorratsbehälter (1) für Schüttgut in den Vorratsbehälter (1) für Schüttgut durch Herstellung eines druckfreien Zustands im Vorratsbehälter (1) und Abführen der anfallenden Druckluft in den Tank (8) zur Zwischenspeicherung von Druckluft nach dem Prinzip des Druckausgleichs,
viii) bei vollständiger Füllung des Tanks (8) zur Zwischenspeicherung von Druckluft Wirken der Rückschlagventile (7) in der ersten Leitung (9) und in der zweiten Leitung (10), Schließen der Ladeventile (4) und Entlassen der Druckluft aus dem Vorratsbehälter (1) für Schüttgut und der Kavität (3) in die Umgebung.

Ein Vorratsbehälter (1), gefüllt mit Rieselgut, wird mit Druckluft beaufschlagt. In Abhängigkeit vom zu verarbeitenden Material und dessen spezifischen Eigenschaften sind Drücke von -1 bar bis 12 bar möglich, bevorzugt im Bereich 0 bar bis 8 bar, besonders bevorzugt im Bereich 1,5 bar bis 2,5 bar. Die formgebende Kavität wird ebenfalls mit Druckluft, im Bereich -1 bar bis 2 bar, besonders im Bereich 1 bar bis 5 bar, vorzugsweise mit 2,3 bar, beaufschlagt, wobei darauf zu achten ist, den Druck beim Füllvorgang in der Kavität geringer zu halten als im Vorratsbehälter (1) für Rieselgut, hier ein Materialsilo.

Dabei wird der Druck im Vorratsbehälter für Rieselgut für den Füllvorgang immer höher eingestellt als jener in der formgebenden Kavität (3). Beim Öffnen der Fülleinheit (2) zwischen dem Vorratsbehälter (1) für Rieselgut und der formgebenden Kavität (3) strömt Material aufgrund des Druckgefälles in die Kavität (3). Der Druckunterschied zwischen dem im Vorratsbehälter (1) für Rieselgut und der formgebenden Kavität (3) beträgt zwischen 0,1 bar und 6 bar, bevorzugt zwischen 0,15 bar und 1 bar, besonders bevorzugt zwischen 0,2 bar und 0,5 bar. Der Materialfluss wird dabei durch die Dosiereinheit gesteuert. Ist die formgebende Kavität (3) gefüllt, wird der Füllvorgang unterbrochen. Um einen Druckanstieg in der formgebenden Kavität (3) während des Füllvorgangs zu verhindern und damit den Füllvorgang der formgebenden Kavität weiterhin zu ermöglichen, wird die sich dort befindende Druckluft, welche durch das einströmende Rieselgut verdrängt wird, über Ladeventil (4) durch eine erste Leitung (9) in den Tank (8) zur Speicherung von Druckluft geführt. Das Druckniveau im Tank (8) ist dabei stets geringer als jenes in der formgebenden Kavität (3), um die Strömungsrichtung der Druckluft physikalisch vorzugeben.

Bei einigen Prozessen kann Heißdampf in der formgebenden Kavität (3) zur Fertigung eines Endprodukts eingesetzt werden. In dem Fall würde nicht nur Druckluft aus der Kavität (3) in den Tank (8) entweichen, sondern mithilfe eines formseitiges Ablassventils (5) auch noch überschüssiges Fluid abgeführt werden können.

Auch der Vorratsbehälter (1) für das Rieselgut wird nach Beendigung des Füllvorgangs der formgebenden Kavität (3) druckfrei gestellt. Die eingesetzte Druckluft wird über Ladeventile (4) und eine zweite Leitung (10) ebenfalls in den Tank (8) zur Zwischenspeicherung von Druckluft geführt. In diesem herrscht ein - im Vergleich zum Vorratsbehälter (1) - geringerer Druck, sodass die Prozessrichtung für die Druckluft physikalisch vorgegeben ist. Prozesstechnisch ist es ratsam, die Fülleinheit (2), bestehend aus mindestens einem Füllschlauch und mindestens einer Dosiereinheit, zwischen formgebender Kavität (3) und Vorratsbehälter (1) druckfrei zu stellen, vorzugsweise über die zweite Leitung (10), und den Druck in dem Tank (8) zur Zwischenspeicherung von Druckluft aufzufangen. Dabei hat es sich als besonders vorteilhaft erwiesen, dass das in der Leitung sowie der Dosiereinheit befindliche Rieselgut zurück in den Vorratsbehälter (1) strömt und damit weiterverwendet werden kann.

Im Tank (8) kann die aufgefangene Druckluft zwischengespeichert werden. Um Energieverluste gering zu halten und ein gewisses Druckniveau zu halten, ist das Tankvolumen variabel einstellbar und kann dem jeweiligen Fertigungsschritt angepasst werden. Eine in der Menge variabel einstellbare Teilfüllung des Tanks (8) mit Wasser als inkompressible Flüssigkeit hat sich hierbei als besonders geeignet gezeigt. Es hat sich gezeigt, dass der Tank (8) zur Zwischenspeicherung von Druckluft ein Volumen bis zu 50 Kubikmetern haben sollte, vorzugsweise aber ein Volumen im Bereich von 0,1 bis 10 Kubikmetern, was 100 bis 10.000 Litern entspricht.

Bei vollständiger Füllung des Tanks (8) mit aufgefangener Druckluft und keiner weiteren Speichermöglichkeit, wird sich noch im System befindliche Druckluft über Entlastungsventile (6) in die Umgebung entlassen. Tankseitige Rückschlagventile (7) in der ersten Leitung (9) und der zweiten Leitung (10) verhindern ein unkontrolliertes Strömen von Druckluft in das System sofern der Druck im Tank (8) höher ist, als in den Leitungen, der formgebenden Kavität (3) und dem Vorratsbehälter für Druckluft.

In einem vierten Aspekt der Erfindung wird ein Verfahren zur Steuerung aller Ventile beansprucht, um einen fertigungstechnisch optimalen Materialfluss bei gleichzeitig geringeren Kosten für Druckluft zu realisieren. Alle Ventile werden derart gesteuert, den Druck sowohl in der formgebenden Kavität (3) als auch im Vorratsbehälter (1) für Rieselgut, einen stetigen und effizienten Materialfluss zu gewährleisten. So ist es von hoher prozesstechnischer Bedeutung, dass die Entlastungsventile (6) geschlossen sind, während die Ladeventile (4) die Leitung der Druckluft ermöglichen. Die Rückschlagventile (7) ermöglichen gezielt das Einströmen von Druckluft in den Tank (8), müssen aber zwingend geschlossen bleiben, wenn die erste Leitung (9) und die zweite Leitung (10) druckfrei gestellt werden.

Auch eine Weiterverwendung der im Tank (8) gespeicherten Druckluft, unabhängig von diesem Prozess in der Partikelschaumverarbeitung, ist möglich.

Das obig beschriebene System zur Druckluftrückgewinnung weist damit folgende Vorteile im Bereich der Energieeffizienz, im Umweltschutz und bei der Kosteneffizienz auf: Der Gesamtenergiebedarf sinkt erheblich durch die effektive Wiederverwendung von Druckluft; es kommt zu einer signifikanten Reduktion der Umweltbelastung durch eine optimierte Ressourcennutzung und die Betriebskosten können durch den reduzierten Energieverbrauch und einem minimierten Komponentenverschleiß erheblich gesenkt werden.

Weitere Ziele, Merkmale und Anwendungsmöglichkeiten ergeben sich aus der nachfolgenden Beschreibung von die Erfindung nicht einschränkenden Ausführungsbeispielen anhand der Figur. Dabei bilden alle beschriebenen und/oder bildlich dargestellten Merkmalen für sich oder in beliebiger Kombination den Gegenstand der Erfindung. Es zeigt:

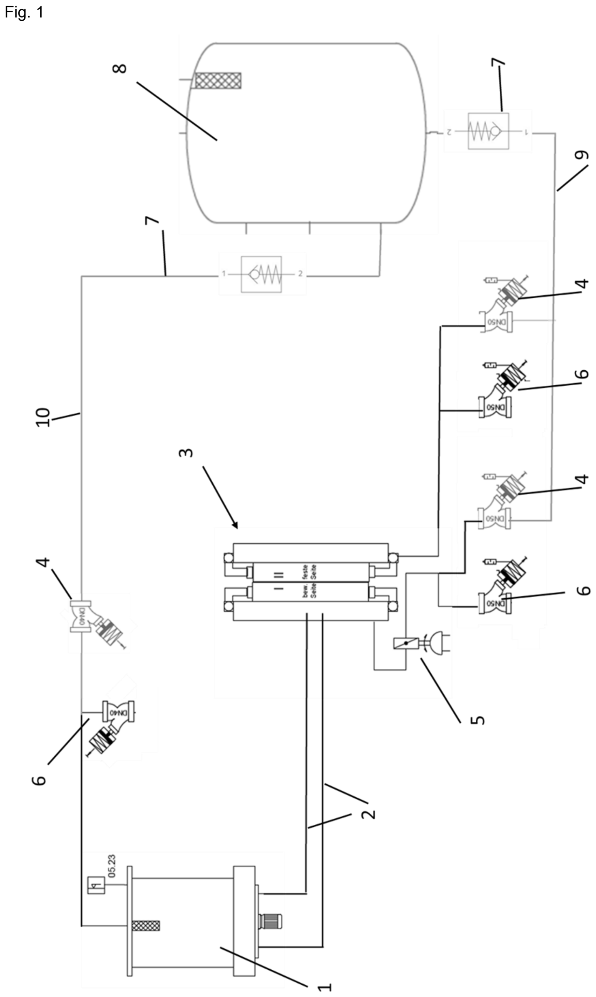

Fig. 1 Pneumatikplan

Figur 1 zeigt einen beispielhaften Pneumatikplan für den bevorzugten Einsatzbereich des erfindungsgemäßen Druckluftrückgewinnungssystems in einem Fertigungsprozess zur Verarbeitung von Rieselgut im Partikelschaumbereich.

Das im Vorratsbehälter 1 für Rieselgut gelagerte Material wird durch eine Fülleinheit 2, bestehend aus Füllschlauch, Dosiereinheit, Durchflusssensor und Element zur Beschleunigung des Materialstroms in die formgebende Kavität 3 transportiert. Weder Dosiereinheit noch Element zur Beschleunigung des Materialstroms und Durchflusssensor sind in Figur 1 als separate Bauteile gekennzeichnet. In diesem Fall handelt es sich bei der formgebenden Kavität 3 um eine 2-teilige Form. Aus jeder Formhälfte wird über einen Teil der ersten Leitung 9 ein Teil der anzuführenden Druckluft in Richtung des Tanks 8 zur Zwischenspeicherung von Druckluft geführt. Die Druckluft durchströmt dabei jeweils ein Ladeventile 4. Hinter den Ladeventilen 4 werden die Druckluftströme der einzelnen ersten Leitungen 9 zusammengeführt und durch ein Rückschlagventil 7 in den Tank 8 zur Zwischenspeicherung von Druckluft geführt. Sollte dieser Tank 8 vollständig gefüllt sein, kann jeder Leitungsteil der ersten Leitung 9 über ein Entlastungsventil 6 druckfrei gestellt werden. Sollte es sich bei dem Prozess zur Herstellung eines Bauteils aus Partikelschaum handeln, welcher zusätzlich Heißdampf beinhaltet, kann entstehendes Fluid aus dem Fertigungsprozess über ein formseitiges Ablassventil 5 der ersten Leitung 9 abgeschieden werden.

Eine zweite Leitung 10 für Druckluft führt vom Vorratsbehälter 1 für Rieselgut durch ein Ladeventil 4 zum Tank 8. Sollte dieser Tank 8 vollständig gefüllt sein, kann auch die zweite Leitung 10 über ein Entlastungsventil 6 druckfrei gestellt werden.

### Bezugszeichen

- 1: Bevorratungseinheit (z.B. Vorratsbehälter für Rieselgut)
- 2: Fülleinheit bestehend aus Füllschlauch, Dosiereinheit, Durchflusssensor und Element zur Beschleunigung des Materialstroms
- 3: Zieleinheit (z.B. formgebende Kavität)
- 4: Ladeventil
- 5: formseitiges Ablassventil
- 6: Entlastungsventil
- 7: Rückschlagventil
- 8: Tank zur Zwischenspeicherung von Druckluft
- 9: erste Leitung
- 10: zweite Leitung

## Patentansprüche

1. System zur Druckluftrückgewinnung für ein druckluftbasiertes Fördersystem, umfassend
- mindestens eine Bevorratungseinheit (1),
- mindestens eine Zieleinheit (3),
- mindestens ein Druckluftsystem,
- Ventile zur Druckentlastung in der Zielposition sowie der Bevorratungsstation,
- mindestens ein Tank (8) zur Zwischenspeicherung von Druckluft.

2. System nach Anspruch 1, ferner umfassend einen Pneumatikkreislauf, umfassend
- eine erste Leitung (9) mit Ladeventil (4) zwischen Zieleinheit (3) und Tank (8) zur Zwischenspeicherung von Druckluft und
- eine zweite Leitung (10) mit Ladeventil (4) zwischen Bevorratungseinheit (1) und Tank (8) zur Zwischenspeicherung von Druckluft sowie
- Rückschlagventile (7) in beiden Leitungen zum Tank.

3. System nach Anspruch 1 oder 2, wobei die Bevorratungseinheit (1) ein Vorratsbehälter für Rieselgut und die Zieleinheit (3) eine füllbare formgebende Kavität ist, welche über eine Fülleinheit (2) miteinander verbunden sind.

4. System nach Anspruch 3, wobei die Fülleinheit (2) mindestens einen Füllschlauch, mindestens eine Dosiereinheit, mindestens einen Durchflusssensor zur Steuerung des Materialflusses zwischen Vorratsbehälter (1) für Rieselgut und Kavität (3) sowie mindestens ein Element zur Strömungsbeschleunigung umfasst.

5. System nach Anspruch 3 oder 4, wobei die formgebende Kavität (3) mehrteilig ausgeführt ist, mit Heizelementen versehen ist sowie mit Anschlüssen für Druckluft und/oder Heißdampf versehen ist und ein formseitiges Ablassventil (5) vorhanden ist.

6. System nach einem der Ansprüche 1 bis 5, wobei der das Volumen des Tanks (8) zur Zwischenspeicherung von Druckluft variabel einstellbar ist.

7. System nach einem der Ansprüche 1 bis 6, wobei der Pneumatikkreislauf derart ausgebildet ist, dass Druckluft aus sowohl der Zieleinheit (3) als auch der Bevorratungseinheit (1) getrennt und jeweils gesteuert in den Tank (8) überführbar ist.

8. Verfahren zur Druckluftrückgewinnung umfassend die Schritte
a) Bedruckung mit Druckluft einer Bevorratungseinheit (1) und einer damit verbundenen Zieleinheit (3), wobei der Druck in der Zieleinheit (3) geringer als in der Bevorratungseinheit (1) gewählt wird,
b) Öffnen der Verbindung zwischen Bevorratungseinheit (1) und Zieleinheit (3),
c) Stoppen der Förderung, wenn eine Zielgröße in der Zieleinheit (3) erreicht ist,
d) Regelung des Drucks für die Zieleinheit (3) durch Ablassen der Druckluft über Ladeventile (4) in den Tank (8) zur Zwischenspeicherung von Druckluft über die erste Leitung (9),
e) Regelung des Drucks für die Bevorratungseinheit (1) durch Ablassen der Druckluft über Ladeventile (4) in den Tank (8) zur Zwischenspeicherung von Druckluft über die zweite Leitung (10)
f) Zwischenspeicherung der abgelassenen Druckluft in den Tank (8) zur Zwischenspeicherung von Druckluft,
g) bei vollständiger Füllung des Tanks (8) zur Zwischenspeicherung von Druckluft Wirken der Rückschlagventile (7) in der ersten Leitung (9) und in der zweiten Leitung (10), Schließen der Ladeventile (4) und Entlassen von Druckluft aus der Bevorratungseinheit (1) und der Zieleinheit (3) in die Umgebung.

9. Verfahren zur Druckluftrückgewinnung nach Anspruch 8, wobei in Schritt d) die Regelung des Drucks für die Zieleinheit (3) durch Ablassen der Druckluft über Ladeventile (4) und zusätzlich ein Rückschlagventil (7) in den Tank (8) zur Zwischenspeicherung von Druckluft über die erste Leitung (9) erfolgt, und/oder
in Schritt e) die Regelung des Drucks für die Bevorratungseinheit (1) durch Ablassen der Druckluft über Ladeventile (4) und zusätzlich ein Rückschlagventil (7) in den Tank (8) zur Zwischenspeicherung von Druckluft über die zweite Leitung (10) erfolgt.

10. Verfahren zur Druckluftrückgewinnung in einem Partikelschaumprozess umfassend die Schritte
i) Bedruckung mit Druckluft eines Vorratsbehälters (1) für Schüttgut und einer damit verbundenen füllbaren, formgebenden Kavität (3), wobei der Druck in der füllbaren, formgebenden Kavität (3) geringer als im Vorratsbehälter (1) für Schüttgut gewählt wird,
ii) Öffnen der Fülleinheit (2) zwischen Vorratsbehälter (1)für Schüttgut und Kavität (3), wobei der Materialfluss durch die Dosiereinheit gesteuert wird,
iii) Stoppen des Materialflusses, wenn ein Füllgrad der formgebenden Kavität (3) erreicht ist,
iv) Regelung des Drucks für den Vorratsbehälter (1) für Schüttgut durch Ablassen der Druckluft über Ladeventile (4) in einen Tank (8) zur Zwischenspeicherung von Druckluft über die erste Leitung (9),
v) Regelung des Drucks für die Kavität (3) durch Ablassen der Druckluft über Ladeventile (4) in den Tank (8) zur Zwischenspeicherung von Druckluft über die zweite Leitung (10),
vi) Zwischenspeicherung der abgelassenen Druckluft in den Tank (8) zur Zwischenspeicherung von Druckluft,
vii) Rückführung des Materials aus Leitungen zwischen formgebender Kavität (3) und Vorratsbehälter (1) für Schüttgut in den Vorratsbehälter (1) für Schüttgut durch Herstellung eines druckfreien Zustands im Vorratsbehälter (1) und Abführen der anfallenden Druckluft in den Tank (8) zur Zwischenspeicherung von Druckluft nach dem Prinzip des Druckausgleichs,
viii) bei vollständiger Füllung des Tanks (8) zur Zwischenspeicherung von Druckluft Wirken der Rückschlagventile (7) in der ersten Leitung (9) und in der zweiten Leitung (10), Schließen der Ladeventile (4) und Entlassen der Druckluft aus dem Vorratsbehälter (1) für Schüttgut und der Kavität (3) in die Umgebung.

11. Verfahren nach Anspruch 8 oder 9 oder 10 ferner umfassend eine Steuerung aller Ventile zur fertigungstechnisch optimalen Gestaltung eines Materialflusses.
